# EUROPEAN PATENT SPECIFICATION

(11) **EP 3 087 793 B1**
(45) Date of publication and mention of the grant of the patent: **12.12.2018**
(21) Application number: 15874738.6
(22) Date of filing: 12.05.2015
(51) Int. Cl.: H04W 74/02, H04W 56/00, H04L 5/00

(54) **NETWORK CONTROL DEVICES AND METHODS OF PERFORMING WIRELESS COMMUNICATIONS BETWEEN TWO COMMUNICATIONS APPARATUSES VIA MULTI-LEVEL SIGNALING ENTITIES**
NETZWERKSTEUERUNGSVORRICHTUNGEN UND VERFAHREN ZUR DURCHFÜHRUNG EINER DRAHTLOSEN KOMMUNIKATION ZWISCHEN ZWEI KOMMUNIKATIONSVORRICHTUNGEN ÜBER MEHRSTUFIGE SIGNALISIERUNGSEINHEITEN
DISPOSITIFS ET PROCÉDÉS DE COMMANDE DE RÉSEAU POUR RÉALISER DES COMMUNICATIONS SANS FIL ENTRE DEUX APPAREILS DE COMMUNICATION PAR L'INTERMÉDIAIRE D'ENTITÉS DE SIGNALISATION MULTI-NIVEAU

(30) Priority: 29.12.2014 US 201462097370 P; 16.02.2015 US 201514623117
(43) Date of publication of application: 02.11.2016
(73) Proprietor: MediaTek Inc., Hsin-Chu 300, Taiwan (TW)
(72) Inventor: GUEY, Jiann-Ching, Hsinchu City Taiwan 300 (TW); YU, Chia-Hao, Yilan County Taiwan 260 (TW); SANG, Aimin Justin, San Diego, CA 92127 (US); CHANG, Ming-Po, New Taipei City Taiwan 234 (TW); CHEN, Ju-Ya, Kaohsiung City Taiwan 807 (TW); SU, Chao-Cheng, Kaohsiung City Taiwan 807 (TW)
(74) Representative: Habermann, Hruschka & Schnabel
(86) International application number: PCT/CN2015/078765
(87) International publication number: WO 2016/107045

(56) References cited:
- US-A1- 2005 129 011
- US-A1- 2006 083 189
- US-A1- 2007 066 329
- US-A1- 2012 309 397
- US-A1- 2013 040 683
- US-A1- 2013 279 412
- US-A1- 2013 329 665
- NSIS WORKING GROUP ROBERT HANCOCK SIEMENS/ROKE MANOR RESEARCH ILYA FREYTSIS CETACEAN NETWORKS GEORGIOS KARAGIANNIS ERICSSON JOHN L: "Next Steps in Signaling: Framework; draft-ietf-nsis-fw-01.txt", NEXT STEPS IN SIGNALING: FRAMEWORK; DRAFT-IETF-NSIS-FW-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. nsis, no. 1, 1 November 2002 (2002-11-01), XP015024459,

## Description

### FIELD OF INVENTION

The invention relates to methods of performing wireless communications, and more particularly to methods of performing wireless communications between two communications apparatuses via multi-level signaling entities.

### BACKGROUND OF THE INVENTION

The term "wireless" normally refers to an electrical or electronic operation that is accomplished without the use of a "hard wired" connection. "Wireless communications" is the transfer of information over a distance without the use of electrical conductors or wires. The distances involved may be short (a few meters for television remote controls) or very long (thousands or even millions of kilometers for radio communications). The best known example of wireless communications is the cellular telephone. Cellular telephones use radio waves to enable an operator to make phone calls to another party, from many locations worldwide. They can be used anywhere, as long as there is a cellular telephone site to house equipment that can transmit and receive signals, which are processed to transfer both voice and data to and from the cellular telephones.

There are various well-developed and well-defined cellular communications radio access technologies (RATs). For example, the Global System for Mobile communications (GSM) is a well-defined and commonly adopted communications system, which uses time division multiple access (TDMA) technology, which is a multiplex access scheme for digital radio, to send voice, data, and signalling data (such as a dialed telephone number) between mobile phones and cell sites. The CDMA2000 is a hybrid mobile communications 2.5G / 3G (generation) technology standard that uses code division multiple access (CDMA) technology. The UMTS (Universal Mobile Telecommunications System) is a 3G mobile communications system, which provides an enhanced range of multimedia services over the GSM system. Wireless Fidelity (Wi-Fi) is a technology defined by the 802.11 engineering standard and can be used for home networks, mobile phones, and video games, to provide a high-frequency wireless local area network. The LTE (Long Term Evolution) and the LTE-Advanced evolved from the LTE are the 4G mobile communications systems, which provide high-speed data transmission over 2G and 3G systems.

For example, from document US 2007/066329 A1 a network control device according to the preamble of claim 1 is known.

### SUMMARY OF THE INVENTION

The invention suggests both a network control device having the features of claim 1 and a method of performing wireless communications between two communications apparatuses in a service network having the features of claim.

Network control devices and methods of performing wireless communications between two communications apparatuses in a service network via a plurality of signaling entities are provided. An exemplary embodiment of a network control device comprises a controller and a wireless communications module. The controller provides a plurality of signaling entities each belonging to one of a plurality of signaling levels to form multi-level signaling entities, and configures one or more signaling entities of the multi-level signaling entities to a communications apparatus to communicate with the communications apparatus based on the one or more configured signaling entities. The wireless communications module transmits a plurality of radio frequency signals via the one or more configured signaling entities.

An exemplary embodiment of a method of performing wireless communications between two communications apparatuses in a service network via a plurality of signaling entities comprises: providing, by a first communications apparatus, multi-level signaling entities comprising a plurality of signaling entities each belonging to one of a plurality of signaling levels; configuring, by the first communications apparatus, one or more signaling entities of the multi-level signaling entities to a second communications apparatus; and communicating, by the first communications apparatus, with the second communications apparatus via the one or more configured signaling entities.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
FIG. 1 is a block diagram illustrating a wireless communications system according to an embodiment of the invention;
FIG. 2 shows a simplified block diagram of a network control device in the service network according to an embodiment of the invention;
FIG. 3 is a schematic diagram illustrating the concept of performing wireless communications in a wireless communications system via a plurality of signaling entities according to an embodiment of the invention;
FIG. 4 is a schematic diagram illustrating a tree-like structure of the proposed multi-level signaling entities according to an embodiment of the invention;
FIG. 5 shows a flow chart of a method of performing wireless communications between two communications apparatuses in a service network via a plurality of signaling entities according to an embodiment of the invention;
FIG. 6 is a schematic diagram showing the states of a communications apparatus and the corresponding state transition according to an embodiment of the invention;
FIG. 7 shows a flow chart of a procedure for performing wireless communications in a service network according to an embodiment of the invention; and
FIG. 8 shows exemplary multi-level beams generated by network control devices in the service network according to an embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

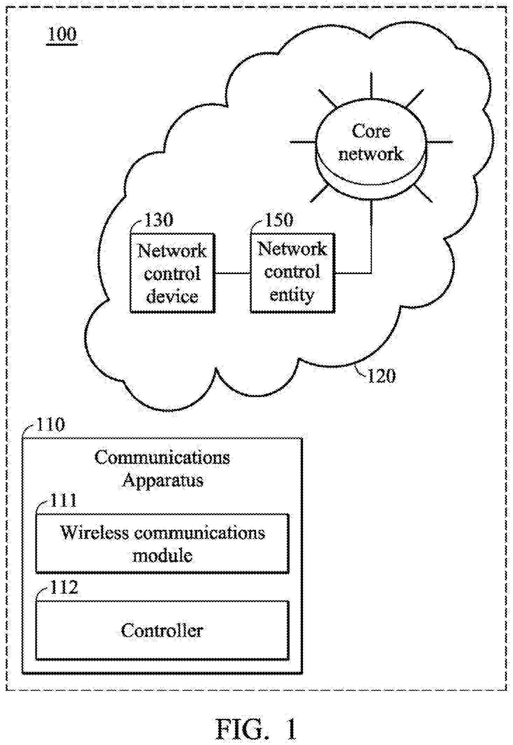

FIG. 1 is a block diagram illustrating a wireless communications system according to an embodiment of the invention. In the wireless communications system 100, a communications apparatus 110 is wirelessly connected to a service network, such as the service network 120 shown in FIG. 1, for obtaining wireless communications services. Operations of the service network 120 are in compliance with a predetermined communications protocol. The service network 120 may comprise one or more network control devices, such as the network control device 130, interfacing between one or more communications apparatuses and the core network, for providing wireless communications services to the communications apparatus 110. The service network 120 may also comprise one or more intermediate control nodes, such as the network control entity 150 shown in FIG. 1, for controlling the operation of the one or more network control devices. In the embodiments of the invention, the network control entity may be a Base Station Controller (BSC), or may be realized in a distributed manner without a centralized controller, or may be a part of a base station's functionality, or the likes, and may be responsible of activating/deactivating and configuring signaling entities (which will be further discussed in the following paragraphs) under its control.

In addition, according to an embodiment of the invention, the network control device may be an evolved Node B (eNB), a Base Station (BS), a Base Station Controller (BSC), a Radio Network Controller (RNC), or the like. Note that in some embodiments of the invention, when the network control device is an eNB or a BS, the network control entity in the service network may be a BSC which can configure the network control devices.

According to an embodiment of the invention, the communications apparatus 110 may be a terminal node wirelessly connected to the service network, such as User Equipment (UE). The communications apparatus 110 may comprise at least a wireless communications module 111 for performing the functionality of wireless transmission and reception to and from the service network 120. To further clarify, the wireless communications module 111 may comprise at least a baseband signal processing device (not shown) and a Radio Frequency (RF) signal processing device (not shown). The baseband signal processing device may contain multiple hardware devices to perform baseband signal processing, including Analog to Digital Conversion (ADC)/Digital to Analog Conversion (DAC), gain adjusting, modulation/demodulation, encoding/decoding, and so on. The RF signal processing device may receive RF wireless signals, process the RF wireless signal, and convert the RF wireless signals to baseband signals, which are to be processed by the baseband signal processing device, or receive baseband signals from the baseband signal processing device, convert the received baseband signals to RF wireless signals, which are later transmitted, and process RF wireless signals. The RF signal processing device may also contain multiple hardware devices to perform radio frequency conversion and RF signal processing. For example, the RF signal processing device may comprise a mixer to multiply the baseband signals with a carrier oscillated in the radio frequency of the wireless communications system, where the radio frequency depends on the RAT in use. Also, the communications apparatus 110 may comprise a controller 112 for controlling the operation of the wireless communications module 111 and functional components (not shown) such as a display unit and/or keypad serving as the MMI (man-machine interface), a storage unit storing data and program codes of applications or communications protocols, and other functional components.

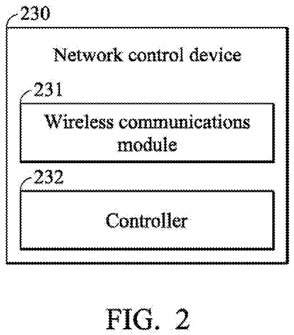

FIG. 2 shows a simplified block diagram of a network control device in the service network according to an embodiment of the invention. According to an embodiment of the invention, the network control device may be an evolved Node B (eNB), a Base Station (BS), a Base Station Controller (BSC), a Radio Network Controller (RNC), or the like, and may also be regarded as a communications apparatus for providing wireless communications services in the service network.

The network control device 230 may also comprise at least a wireless communications module 231 for performing the functionality of wireless transmission and reception between one or more peer devices, such as the communications apparatus 110 shown in FIG. 1, and the core network. To further clarify, the wireless communications module 231 may comprise a baseband signal processing device (not shown) and a Radio Frequency (RF) signal processing device (not shown). The baseband signal processing device may contain multiple hardware devices to perform baseband signal processing, including Analog to Digital Conversion (ADC)/Digital to Analog Conversion (DAC), gain adjusting, modulation/demodulation, encoding/decoding, and so on. The RF signal processing device may receive RF wireless signals, process the RF wireless signals, and convert the RF wireless signals to baseband signals, which are to be processed by the baseband signal processing device, or receive baseband signals from the baseband signal processing device, convert the received baseband signals to RF wireless signals, which are later transmitted, and process RF wireless signals. The RF signal processing device may also contain multiple hardware devices to perform radio frequency conversion. For example, the RF signal processing device may comprise a mixer to multiply the baseband signals with a carrier oscillated in the radio frequency of the wireless communications system, where the radio frequency depends on the RAT in use. Also, the network control device 230 may comprise a controller 232 for controlling the operation of the wireless communications module 231 and other functional components (not shown), such as a storage unit storing data and program codes of applications or communications protocols, or others.

According to an embodiment of the invention, since there are a plurality of signaling entities (or, radio access paths) in a wireless communications system, how to integrate the signaling entities and methods of performing wireless communications between two communications apparatuses via the signaling entities are proposed.

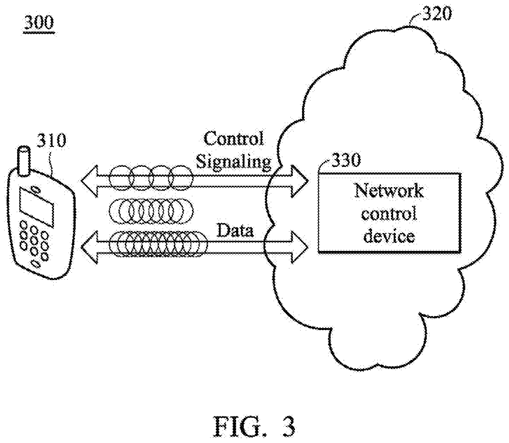

FIG. 3 is a schematic diagram illustrating the concept of performing wireless communications in a wireless communications system via a plurality of signaling entities according to an embodiment of the invention. In the wireless communications system 300, a communications apparatus, such as a UE 310, is wirelessly connected to a service network, such as the service network 320, for obtaining wireless communications services. The service network 320 may comprise one or more network control devices, such as the network control device 330, interfacing between one or more communications apparatuses and the core network, for providing wireless communications services to the UE 310.

According to an embodiment of the invention, a controller (such as the controller 232 shown in FIG. 2) of the network control device 330 is capable of providing a plurality of signaling entities, which are represented by the circles shown in FIG. 3. The signaling entities are utilized as transmission mediums in the wireless communications system. The signaling entities provided by the network control device 330 may be regarded as "associated with" the network control device 330.

According to the embodiment of the invention, each signaling entity may belong to one of a plurality of signaling levels to form multi-level signaling entities. In addition, according to the embodiment of the invention, the signaling levels may be hierarchical signaling levels.

The controller of the network control device 330 may further configure one or more signaling entities of the multi-level signaling entities to a communications apparatus, such as the UE 310 shown in FIG. 3, to communicate with the communications apparatus based on the one or more configured signaling entities by transmitting a plurality of radio frequency signals via the one or more configured signaling entities by the wireless communications module (such as the wireless communications module 231 shown in FIG. 2) of the network control device 330. As shown in FIG. 3, the control signaling and data are transmitted via the signaling entities configured to the UE 310.

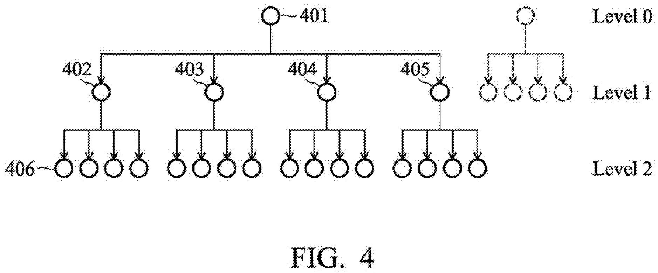

FIG. 4 is a schematic diagram illustrating a tree-like structure of the proposed multi-level signaling entities according to an embodiment of the invention. In FIG. 4, each circle represents a signaling entity. There are three signaling levels shown in FIG. 4, including Level 0, Level 1 and Level 2. According to an embodiment of the invention, an ancestor (lineal ancestor) signaling entity in one signaling level may comprise one or more descendant signaling entities in a subsequent signaling level. For example, the signaling entity 401 in Level 0 may comprise descendant signaling entities 402, 403, 404 and 405 in Level 1. In such examples, the signaling level Level 0 may also be regarded as the ancestor signaling level of the signaling level Level 1, and the signaling level Level 1 may also be regarded as the descendant signaling level of the signaling level Level 0. In addition, a signaling entity is a child to at most one parent signaling entity. For example, the signaling entity 402 is a child to at most one parent signaling entity 401, and the signaling entity 406 is a child to at most one parent signaling entity 402.

According to an embodiment of the invention, the multi-level signaling entities may be characterized by one or more of a plurality of physical layer attributes comprising a carrier frequency for communications, a time interval for communications, a frequency band for communications, and a resolution and/or a radio coverage area for communications and transmission power for communications. According to an embodiment of the invention, the time interval and the frequency band may be the resources provided for the communications to take place. In addition, according to an embodiment of the invention, the signaling entities in different signaling levels may have different resolutions. Each signaling level may have a corresponding resolution. At least one signaling entity is formed within one signaling level.

In addition, according to an embodiment of the invention, the radio coverage area may be defined by, for example, the 3dB beamwidth and the orientation of a beam when each signaling entity is a beam and may result from beamforming originating from the same location or transmission from a different location.

In addition, in some embodiments of the invention, the physical layer attributes of the signaling entities at different signaling levels may be further characterized by a radio coverage area of an ancestor signaling entity encompassing radio coverage area(s) of its descendant signaling entity\entities. In addition, in some embodiments of the invention, the physical layer attributes of the signaling entities at different signaling levels may be further characterized by the transmission gain of one signaling entity being greater than the transmission gain of its ancestor signaling entity. In addition, in some embodiments of the invention, the physical layer attributes of the signaling entities at different signaling levels may be further characterized by a radio coverage area of one signaling entity being more focused than a radio coverage area of its ancestor signaling entity.

In addition, in some embodiments of the invention, the hierarchical signaling levels may further be characterized by a transmission utilizing one or more signaling entities in one signaling level being more robust than a transmission utilizing one or more signaling entities at its descendant signaling level. In addition, in some embodiments of the invention, the hierarchical signaling levels may further be characterized in that transmission utilizing one or more signaling entities in one signaling level may be more efficient than utilizing one or more signaling entities in its ancestor signaling level. Therefore, in some embodiments of the invention, when one signaling entity is configured to transmit control signaling, its descendant signaling entity\entities may be further configured to transmit data.

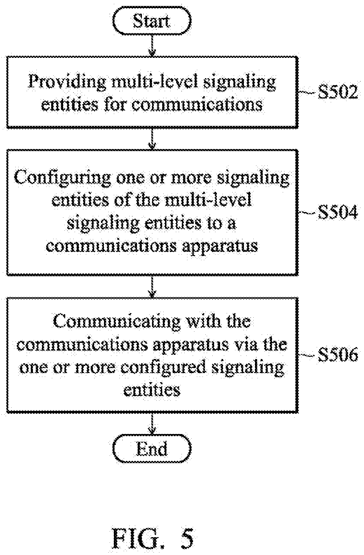

FIG. 5 shows a flow chart of a method of performing wireless communications between two communications apparatuses in a service network via a plurality of signaling entities according to an embodiment of the invention. First of all, a first communications apparatus (such as the network control device 130, 230 and/or 330) may provide multi-level signaling entities for communications (Step S502). As discussed above, the multi-level signaling entities may comprise a plurality of signaling entities each belonging to one of a plurality of signaling levels. Next, the first communications apparatus may configure one or more signaling entities of the multi-level signaling entities to a second communications apparatus (such as the communications apparatus 110 and/or the UE 310) (Step S504). Note that in the embodiments of the invention, the configured signaling entities may belong to the same or different signaling levels. Finally, the first communications apparatus may communicate with the second communications apparatus via the one or more configured signaling entities (Step S506).

According to an embodiment of the invention, each signaling entity may provide at least one of the following functions through the resources available to the signaling entity, the functionalities may comprise: 1). A synchronization service to facilitate a communications apparatus to affix to one or more signaling entity so as to utilize the services provided by the signaling entity, 2). Measurement signaling allowing a communications apparatus to determine the quality of service provided by the signaling entity, 3). A data channel that transports data to and from a communications apparatus, and 4). Control signaling between two communications apparatuses facilitating the data transport and the transition of the communications apparatus from currently affixed signaling entities to another set of affixed signaling entities. A communications apparatus may communicate with another communications apparatus in the service network through services and functions provided by one or more signaling entities.

According to an embodiment of the invention, the resources available to the signaling entity may comprise at least the time interval in the time domain, the frequency band in the frequency domain, orientation of a beam in the spatial domain, power, and the code utilized for communications. Allocation of these resources to the various services may be pre-determined and understood by the communicating apparatuses, blindly detected by the communicating apparatuses, dynamically configured by a network control device and signaled by control signaling of the current signaling entity or one or more ancestor signaling entities of the current signaling entity, or a semi-static configuration signaled by higher-layer protocol (for example, Radio Resource Control (RRC) in LTE). In addition, the physical layer resources may be utilized by the various services in a contention manner.

According to an embodiment of the invention, a communications apparatus (such as the communications apparatus 110 and/or the UE 310) may operate in one of the following states with respect to a signaling entity, comprising a synchronized state, a monitoring state, an affixed state and a dissociated state.

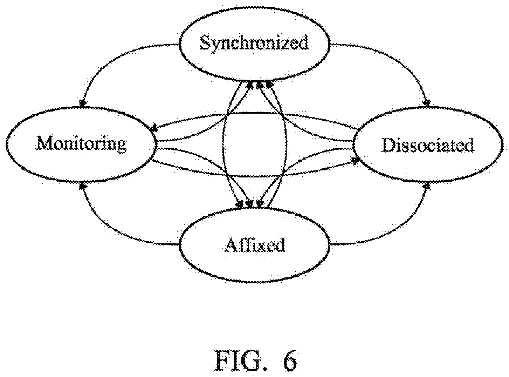

FIG. 6 is a schematic diagram showing the states of a communications apparatus and the corresponding state transition according to an embodiment of the invention. According to an embodiment of the invention, the communications apparatus may receive one or more radio frequency signals transmitted by the network control device (such as the network control device 130, 230 and/or 330) via at least one signaling entity to synchronize time and frequency with the network control device. After synchronizing time and frequency with the network control device, the communications apparatus is able to extract the radio resources and read the contents carried by the resources.

In addition, according to an embodiment of the invention, in the monitoring state, the communications apparatus may further monitor certain radio characteristics, such as channel quality, of one or more radio frequency signals transmitted by the network control device via at least one signaling entity to measure quality of service provided by the signaling entity.

In addition, according to an embodiment of the invention, in the affixed state, the communications apparatus may affix to at least one signaling entity provided by the network control device so as to utilize one or more service(s) provided by the signaling entity. After affixing to the at least one signaling entity, two-way control signaling is established between the communications apparatus and the network control device. In other words, the communications apparatus has the ability to establish a two-way communications with the network control device after affixing to the at least one signaling entity.

In addition, according to an embodiment of the invention, in the dissociated state, the communications apparatus may experience loss of synchronization or the cessation of an attempt to synchronize to a previously affixed signaling entity.

According to an embodiment of the invention, the communications apparatus is able to directly utilize one or more descendant signaling entity\entities of the affixed signaling entity for communications without affixing to the one or more descendant signaling entity\entities. For example, the communications apparatus can utilize the data channel provided by a signaling entity without being affixed to it. Only synchronization is required to establish the data channel and the control signaling for the data transmission can come from a different signaling entity, such as an ancestor signaling entity of that signaling entity.

In addition, according to an embodiment of the invention, the communications apparatus may further monitor signal quality of an ancestor, a descendant or a sibling signaling entity of the currently affixed signaling entity. Furthermore, the communications apparatus may further continuously monitor signal quality of the currently affixed signaling entity and signal quality of relevant detectable signaling entities, such as an ancestor, a descendant or a sibling signaling entity of the affixed signaling entity, or a signaling entity within proximal radio coverage area of a currently affixed signaling entity during a process of communicating with the network control device. The monitoring of relevant detectable signaling entities may comprise measuring the quality of service and synchronization of the monitored signaling entities and/or the establishment of the ability to read control channels in the monitored signaling entities.

In addition, according to an embodiment of the invention, the communications apparatus may enter the wireless communications protocol by first affixing to one or more of the signaling entities in an entry signaling level. According to an embodiment of the invention, there may be a plurality of predefined entry signaling levels and the communications apparatus may select a preferred entry signaling level from the predefined entry signaling levels before first affixing to one or more of the signaling entities. The communications apparatus may select the preferred entry signaling level based on the previous entry experience of the communications apparatus. By affixing to one or more signaling entities in an entry level, the communications apparatus may camp on or attach to the network control devices associated with the affixed one or more signaling entities and thereby establishes the entry into the service network.

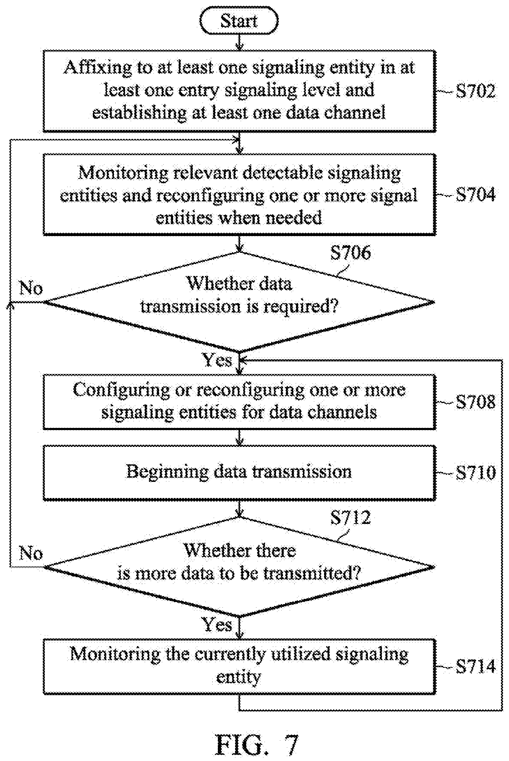

FIG. 7 shows a flow chart of a procedure for performing wireless communications in a service network according to an embodiment of the invention. First of all, the communications apparatus (such as the communications apparatus 110 and/or the UE 310) may enter the protocol of the wireless communications by affixing to at least one signaling entity in at least one entry signaling level (Step S702). After entering the protocol by affixing to at least one signaling entity in at least one entry signaling level, the communications apparatus may then establish at least one data channel in the affixed signaling entity or one of its descendant signaling entities. The establishment of a data channel is facilitated by the control signaling of the currently affixed signaling entity. Next, the communicating device may continuously monitor relevant detectable signaling entities and determine, in conjunction with the network control device, whether reconfiguring one or more signal entities is needed based on the monitoring results (Step S704). That is, the communications apparatus may determine, in conjunction with the network control device, whether to synchronize to, monitor, affix to or dissociate from a signaling entity. When reconfiguring one or more signal entities is needed, the network control device may reconfigure one or more signal entities and the communications apparatus may then synchronize to, monitor and affix to the one or more reconfigured signal entities.

Next, the communications apparatus may determine whether data transmission is required (Step S706). For example, whether there is any data packet that needs to be transmitted. When data transmission is not required, the procedure returns to step S704 to keep monitoring relevant detectable signaling entities. When data transmission is required, the network control device may configure or reconfigure one or more signaling entities for data channels (Step S708), and the data transmission may begin (Step S710). The communications apparatus may further determine whether there is more data to be transmitted (Step S712). When there is no more data to be transmitted, the procedure returns to step S704 to keep monitoring relevant detectable signaling entities. When there is still some data to be transmitted, the communications apparatus may keep monitoring the currently utilized signaling entity (Step S714) to report the monitoring results to the network control device, and the procedure returns to step S708 for configuration or reconfiguration.

According to an embodiment of the invention, the multi-level signal entities may be the transmission beams generated by the network control device and utilized for beamforming. An exemplary scenario of wireless communications utilizing multi-level beams will be illustrated in the following paragraphs.

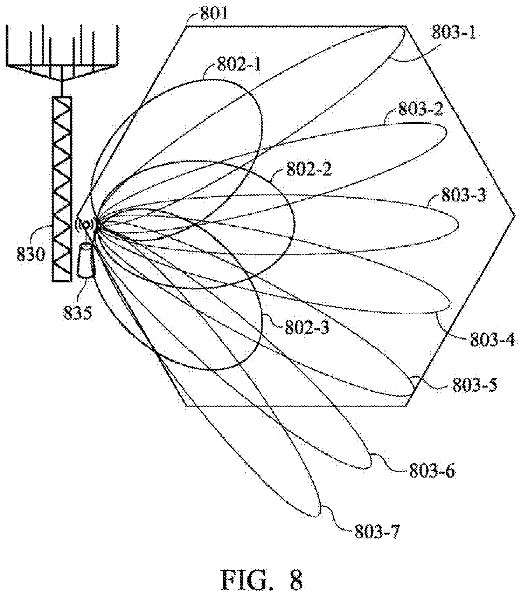

FIG. 8 shows exemplary multi-level beams generated by network control devices in the service network according to an embodiment of the invention. As shown in FIG. 8, there may be two network control devices in the service network, one is a macro cell 830 and the other one is a small cell 835. In addition, there may be one network control entity (e.g. a BSC) in the service network that can configure both the macro cell and small cell and their associated signaling entities. These signaling entities may belong to the same tree in the hierarchy and may be readily accessible to the network control device. The macro cell 830 accompanied with the small cell 835 may generate several beams with different beam widths in different signaling levels. For example, the hexagon 801 may represent a radio coverage area of the beam(s) generated by the macro cell 830, the beams 802-1∼802-3 and 803-1∼803-7 are the beams generated by the small cell 835. As shown in FIG. 8, the radio coverage areas of the beams generated by the macro cell 830 and the small cell 835 may be different, where the radio coverage area may be defined by, for example, the 3dB beam width and the orientation of the beam.

For example, since the radio coverage area of the beam(s) generated by the macro cell 830 is the widest among the beams, the beam(s) generated by the macro cell 830 may belong to the first signaling level Level 0. Similarly, the beams 802-1∼802-3 generated by the small cell 835 may belong to the second signaling level Level 1, and the beams 803-1∼803-7 generated by the small cell 835 may belong to the third signaling level Level 2. Therefore, each level of beam has different beam widths. In addition, the focus areas of higher level beams (that is, the beams belonging to the signaling level with a relatively greater number) lie within the focus area of a lower level beam (that is, the beam belonging to the signaling level with a relatively smaller number).

According to an embodiment of the invention, the network control device(s) are responsible for activating/deactivating and configuring signaling entities under its control. In addition, in the embodiments of the invention, the lower level beams provide certain control signaling functions to facilitate more efficient data communications over higher level beams. For example, when the first signaling level Level 0 is an entry signaling level, the beams in the first signaling level Level 0 may provide certain control signaling functions and the beams in the second signaling level Level 1 and/or the beams in the third signaling level Level 2 may provide data channel(s) for data transmission. For another example, when the second signaling level Level 1 is an entry signaling level, the beams in the second signaling level Level 1 may provide certain control signaling functions and the beams in the third signaling level Level 2 may provide data channel(s) for data transmission. The signaling level providing control signaling functions may comprises multiple control beams as its child signaling entities.

In addition, in the embodiment of the invention, an entry signaling level may function without its ancestor signaling level. For example, when the second signaling level Level 1 is an entry signaling level, the second signaling level Level 1 may function without the first signaling level Level 0. In addition, in the embodiment of the invention, a communications apparatus (such as the communications apparatus 110 and/or the UE 310) may further affix to the signal entity in an ancestor signaling level of an entry signaling level after affixing to the signal entity in the entry signaling level, or may determine not to affix to the signal entity in an ancestor signaling level of an entry signaling level.

According to the embodiments of the invention, by utilizing the multi-level signaling entities, generalization and combination of dual connectivity (for example, for a communications apparatus camping on both a macro cell and a small cell for communications as shown in FIG. 8) and carrier aggregation may be achieved. In addition, integration of dual connectivity with multi-level signaling entities into a single framework may also be achieved. In addition, unlike the prior art system design in which there is only one entry level, in the embodiments of the invention, there can be multiple entry signal levels. In addition, the number of hierarchical signaling levels is not limited to any specific number. In addition, in the embodiments of the invention, level skipping is workable. For example, in the embodiment shown in FIG. 8, the beams in the first signaling level Level 0 may provide certain control signaling functions and the beams in the third signaling level Level 2 may provide data channel(s) for data transmission. In addition, in the embodiments of the invention, there may be more than one signaling entity providing data channels, multiple signaling entities configured for one communications apparatus with only one ancestor signaling entity providing control signaling or with more than one signaling entity (in the same level or an ancestral level to the data channel) providing control signaling. In addition, in some embodiments of the invention, different physical layer attributes can be artificially generated based on the same physical channel. The signaling entities with different beam-widths may have the same ancestor signaling entity.

Via the proposed multi-level signaling entities, the signaling entities in the same or different wireless communications framework may be integrated and wireless communications can be performed more robustly and more efficiently than before.

The above-described embodiments of the present invention can be implemented in any of numerous ways. For example, the embodiments may be implemented using hardware, software or a combination thereof. It should be appreciated that any component or collection of components that perform the functions described above can be generically considered as one or more processors that control the discussed above function. The one or more processors can be implemented in numerous ways, such as with dedicated hardware, or with general purpose hardware that is programmed using microcode or software to perform the functions recited above.

While the invention has been described by way of example and in terms of preferred embodiment, it is to be understood that the invention is not limited thereto. Those who are skilled in this technology can still make various alterations and modifications without departing from the scope of this invention. Therefore, the scope of the present invention shall be defined and protected by the following claims and their equivalents.

## Claims

1. A network control device (130;230;330;830;835), comprising:
a controller (112;232), providing a plurality of signaling entities each belonging to one of a plurality of signaling levels to form multi-level signaling entities and configuring (708) one or more signaling entities of the multi-level signaling entities to a communications apparatus (110;310) to communicate with the communications apparatus (110;310) based on the one or more configured signaling entities; and
a wireless communications module (231), transmitting (710) a plurality of radio frequency signals via the one or more configured signaling entities,
wherein the signaling entities are the transmission beams (802-1∼802-3;803-1∼803-7) utilized for beamforming, and the signaling entities in different signaling levels are the transmission beams (802-1∼802-3;803-1∼803-7) with different beam widths,
**characterized by**
the communications apparatus (110;310) being adapted to enter a wireless communications protocol by first affixing (702) to at least one signaling entity provided by the network control device (130;230;330;830;835) in an entry signaling level so as to utilize one or more service(s) provided by the at least one signaling entity; and
the signaling entities (401; 402-405; 406) in different signaling levels forming a hierarchical, tree-like structure, in which a first signaling entity (401) having a first beam width in one signaling level comprises one or more second signaling entities (402∼405) in a subsequent signaling level having a second beam width being narrower than the first beam width, the first signaling entity being an ancestor of the second signaling entity and the one or more second signaling entities (402∼405) being a descendant of the first signaling entity, respectively, in the hierarchical structure, and
the signaling entities in different signaling levels being provided to the communications apparatus (110;310) for it to be capable of camping on or attaching to the network control device (130;230;330;830;835) by affixing to the signaling entities in different signaling levels.

2. The network control device (130;230;330;830;835) as claimed in claim 1, wherein the signaling entities are **characterized by** one or more of a plurality of physical layer attributes comprising a carrier frequency for communications, a time interval for communications, a frequency band for communications, a radio coverage area for communications and transmission power for communications.

3. The network control device (130;230;330;830;835) as claimed in claim 1, wherein a radio coverage area of a first signaling entity having a first beam width encompasses radio coverage area(s) of second signaling entity\entities descendant of the first signaling entity, the second signaling entity\entities having a second beam width being narrower than the first beam width.

4. The network control device (130;230;330;830;835) as claimed in claim 1, wherein a transmission gain of the second signaling entity is greater than a transmission gain of the first signaling entity.

5. The network control device (130;230;330;830;835) as claimed in claim 1, wherein, when the first signaling entity is configured to transmit control signaling to the communications apparatus (110;310), the one or more second signaling entity\entities (402-405) is/are further configured to transmit data to the communications apparatus (110;310).

6. A method of performing wireless communications between two communications apparatuses (110;310;130;230;330;830;835) in a service network (120;320) via a plurality of signaling entities comprising:
providing, by a first communications apparatus (130;230;330;830;835), multi-level signaling entities comprising a plurality of signaling entities each belonging to one of a plurality of signaling levels;
configuring (708), by the first communications apparatus (130;230;330;830;835), one or more signaling entities of the multi-level signaling entities to a second communications apparatus (110;310); and
communicating (710), by the first communications apparatus (130;230;330;830;835), with the second communications apparatus (110;310) via the one or more configured signaling entities,
wherein the signaling entities are the transmission beams (802-1∼802-3;803-1∼803-7) utilized for beamforming, and
the signaling entities in different signaling levels are the transmission beams (802-1∼802-3;803-1∼803-7) with different beam widths,
**characterized by**
method further comprising:
entering a wireless communications protocol by first affixing (702), by the second communications apparatus (110;310), to at least one signaling entity provided by the first communications apparatus (130;230;330;830;835) in an entry signaling level so as to utilize one or more service(s) provided by the least one signaling entity; and
the signaling entities (401; 402-405; 406) in different signaling levels forming a hierarchical, tree-like structure, in which a first signaling entity (401) having a first beam width in one signaling level comprises one or more second signaling entities (402-405) in a subsequent signaling level having a second beam width being narrower than the first beam width, the first signaling entity being an ancestor of the second signaling entity and the the second signaling entity being a descendant of the first signaling entity, respectively, in the hierarchical structure, and
the signaling entities in different signaling levels being provided to the second communications apparatus (110;310) for it to be capable of camping on or attaching to the first communications apparatus (130;230;330;830;835) by affixing to the signaling entities in different signaling levels.

7. The method as claimed in claim 6, wherein the signaling entities are **characterized by** one or more of a plurality of physical layer attributes comprising a carrier frequency for communications, a time interval for communications, a frequency band for communications, a radio coverage area for communications and transmission power for communications.

8. The method as claimed in claim 6, wherein a radio coverage area of a first signaling entity having a first beam width encompasses radio coverage area(s) of second signaling entity\entities descendant of the first signaling entity, the second signaling entity\entities having a second beam width being narrower than the first beam width.

9. The method as claimed in claim 6, wherein a transmission gain of the second signaling entity is greater than a transmission gain of the first signaling entity.

10. The method as claimed in claim 6, wherein, when the first signaling entity is configured to transmit control signaling to the second communications apparatus (110;310), the second signaling entity\entities is/are further configured to transmit data to the second communications apparatus (110;310).

11. The method as claimed in claim 6, further comprising:
receiving, by the second communications apparatus (110;310), one or more radio frequency signals transmitted by the first communications apparatus (130;230;330;830;835) via at least one signaling entity to synchronize time and frequency with the first communications apparatus (130;230;330;830;835).

12. The method as claimed in claim 6, further comprising:
monitoring, by the second communications apparatus (110;310), quality of one or more radio frequency signals transmitted by the first communications apparatus (130;230;330;830;835) via at least one signaling entity to measure a quality of service provided by the signaling entity.

13. The method as claimed in claim 6, wherein the second communications apparatus (110;310) is able to directly utilize one or more signaling entity\entities comprised in the affixed signaling entity for communications without affixing to the one or more signaling entity\entities.

14. The method as claimed in claim 6, wherein after affixing to the at least one signaling entity, two-way control signaling is established between the first communications apparatus (130;230;330;830;835) and the second communications apparatus (110;310).

15. The method as claimed in claim 6, further comprising:
monitoring, by the second communications apparatus (110;310), signal quality of at least one signaling entity different from the affixed signaling entity.

16. The method as claimed in claim 6, further comprising:
continuously monitoring, by the second communications apparatus (110;310), signal quality of the affixed signaling entity and signal quality of at least one signaling entity different from the affixed signaling entity during a process of communicating with the first communications apparatus (130;230;330;830;835).

17. The method as claimed in claim 6, further comprising:
selecting, by the second communications apparatus (110;310), a preferred entry signaling level from a plurality of predefined entry signaling levels before first affixing to a signaling entity.

18. The method as claimed in claim 17, wherein the preferred entry signaling level is selected by the second communications apparatus (110;310) based on previous entry experience of the second communications apparatus (110;310).

## Patentansprüche

1. Netzwerksteuerungsvorrichtung (130;230;330;830;830;835), aufweisend:
eine Steuerung (112;232), die eine Vielzahl von Signalisierungseinheiten bereitstellt, die jeweils zu einer aus einer Vielzahl von Signalisierungsebenen gehören, um mehrstufige Signalisierungseinheiten zu bilden, und um eine oder mehrere Signalisierungseinheiten der mehrstufigen Signalisierungseinheiten in Bezug auf eine Kommunikationsvorrichtung (110;310) zu konfigurieren (708), um mit der Kommunikationsvorrichtung (110;310) basierend auf der einen oder mehreren konfigurierten Signalisierungseinheiten zu kommunizieren; und
ein drahtloses Kommunikationsmodul (231), das eine Vielzahl von Hochfrequenzfunksignalen über die einen oder mehreren konfigurierten Signalisierungseinheiten sendet (710),
wobei die Signalisierungseinheiten die zur Strahlformung verwendeten Übertragungsstrahlen (802-1∼802-3;803-1∼803-7) sind, und wobei die Signalisierungseinheiten in verschiedenen Signalisierungsebenen die Übertragungsstrahlen (802-1∼802-3;803-1∼803-7) mit unterschiedlichen Strahlbreiten sind,
**dadurch gekennzeichnet, dass**
die Kommunikationsvorrichtung (110;310) angepasst ist, um in ein drahtloses Kommunikationsprotokoll einzutreten, indem sie zuerst an mindestens einer Signalisierungseinheit angebracht (702) wird, die von der Netzwerksteuerungsvorrichtung (130;230;330;830;835) in einem Eingangssignalisierungspegel bereitgestellt wird, um einen oder mehrere Dienste zu nutzen, die von der mindestens einen Signalisierungseinheit bereitgestellt werden; und
die Signalisierungseinheiten (401;402∼405;406) in verschiedenen Signalisierungsebenen eine hierarchische, baumartige Struktur bilden, bei der eine erste Signalisierungseinheit (401), die eine erste Strahlbreite in einer Signalisierungsebene aufweist, eine oder mehrere zweite Signalisierungseinheiten (402~405) in einer nachfolgenden Signalisierungsebene aufweist, die eine zweite Strahlbreite aufweisen, die schmaler ist als die erste Strahlbreite, wobei jeweils die erste Signalisierungseinheit ein Vorgänger der zweiten Signalisierungseinheit ist und die eine oder mehreren zweiten Signalisierungseinheiten (402~405) Nachfolger der ersten Signalisierungseinheit in der hierarchischen Struktur sind, und
die Signalisierungseinheiten in verschiedenen Signalisierungsebenen der Kommunikationsvorrichtung (110;310) bereitgestellt werden, damit diese in die Lage versetzt wird, auf der Netzwerksteuerungsvorrichtung (130;230;330;830;835) zu lagern oder sich an diese anzuschließen, indem sie an den Signalisierungseinheiten in verschiedenen Signalisierungsebenen befestigt wird.

2. Netzwerksteuerungsvorrichtung (130;230;330;830;835) nach Anspruch 1, bei der die Signalisierungseinheiten durch ein oder mehrere von mehreren physikalischen Schichtattributen gekennzeichnet sind, die eine Trägerfrequenz für Kommunikationen, ein Zeitintervall für Kommunikationen, ein Frequenzband für Kommunikationen, einen Funkdeckungsbereich für Kommunikationen und eine Sendeleistung für Kommunikationen umfassen.

3. Netzwerksteuerungsvorrichtung (130;230;330;830;835) nach Anspruch 1, bei der ein Funkabdeckungsbereich einer ersten Signalisierungseinheit mit einer ersten Strahlbreite die Funkabdeckungsfläche(n) der zweiten Signalisierungseinheit(en) umfasst, die von der ersten Signalisierungseinheit abstammt/abstammen, wobei die zweiten Signalisierungseinheit(en) eine zweite Strahlbreite aufweist/aufweisen, die schmaler als die erste Strahlbreite ist.

4. Netzwerksteuerungsvorrichtung (130;230;330;830;835) nach Anspruch 1, bei der eine Übertragungsverstärkung der zweiten Signalisierungseinheit größer als eine Übertragungsverstärkung der ersten Signalisierungseinheit ist.

5. Netzwerksteuerungsvorrichtung (130;230;330;830;835) nach Anspruch 1, bei der, wenn die erste Signalisierungseinheit konfiguriert ist, um Steuersignale an die Kommunikationsvorrichtung (110;310) zu übertragen, die eine oder die mehreren zweiten Signalisierungseinheiten (402∼405) des Weiteren konfiguriert ist/sind, um Daten an die Kommunikationsvorrichtung (110;310) zu übertragen.

6. Verfahren zum Durchführen einer drahtlosen Kommunikation zwischen zwei Kommunikationsvorrichtungen (110;310;130;230;330;830;835) in einem Dienstnetzwerk (120;320) über eine Vielzahl von Signalisierungselementen, aufweisend:
Bereitstellen von mehrstufigen Signalisierungseinheiten, die eine Vielzahl von Signalisierungseinheiten umfassen, die jeweils zu einer von mehreren Signalisierungsebenen gehören, durch eine erste Kommunikationsvorrichtung (130;230;330;830;835);
Konfigurieren (708) einer oder mehrerer Signalisierungseinheiten der mehrstufigen Signalisierungseinheiten in Bezug auf eine zweite Kommunikationsvorrichtung (110;310) durch die erste Kommunikationsvorrichtung (130;230;330;830;835); und
Kommunizieren (710) durch die erste Kommunikationsvorrichtung (130;230;330;830;835) mit der zweiten Kommunikationsvorrichtung (110;310) über die eine oder die mehreren konfigurierten Signalisierungseinheiten,
wobei die Signalisierungseinheiten die Übertragungsstrahlen (802-1∼802-3;803-1∼803-7) sind, die zur Strahlformung verwendet werden, und wobei die Signalisierungseinheiten in verschiedenen Signalisierungsebenen die Übertragungsstrahlen (802-1∼802-3;803-1∼803-7) mit unterschiedlichen Strahlbreiten sind,
**dadurch gekennzeichnet, dass**
das Verfahren des Weiteren aufweist:
Eintreten in ein drahtloses Kommunikationsprotokoll durch erstes Anbringen (702), durch die zweite Kommunikationsvorrichtung (110;310), an mindestens eine Signalisierungseinheit, die von der ersten Kommunikationsvorrichtung (130;230;330;830;835) in einem Eingangssignalpegel bereitgestellt wird, um einen oder mehrere Dienste zu nutzen, der/die von der mindestens einen Signalisierungseinheit bereitgestellt wird/werden; und
die Signalisierungseinheiten (401;402∼405;406) in verschiedenen Signalisierungsebenen, die eine hierarchische, baumartige Struktur bilden, wobei eine erste Signalisierungseinheit (401) eine erste Strahlbreite in einer Signalisierungsebene aufweist, eine oder mehrere zweite Signalisierungseinheiten (402∼405) in einer nachfolgenden Signalisierungsebene mit einer zweiten Strahlbreite aufweist/aufweisen, die schmaler als die erste Strahlbreite ist, wobei jeweils die erste Signalisierungseinheit ein Vorgänger der zweiten Signalisierungseinheit und die zweite Signalisierungseinheit ein Nachfolger der ersten Signalisierungseinheit in der hierarchischen Struktur ist, und
die Signalisierungseinheiten in verschiedenen Signalisierungsebenen der zweiten Kommunikationsvorrichtung (110;310) bereitgestellt werden, damit sie in die Lage versetzt wird, auf der ersten Kommunikationsvorrichtung (130;230;330;830;835) zu lagern oder sich an diese anzuschließen, indem sie an den Signalisierungseinheiten in verschiedenen Signalisierungsebenen befestigt wird.

7. Verfahren nach Anspruch 6, bei dem die Signalisierungseinheiten durch eine oder mehrere aus einer Vielzahl von physikalischen Schichtattributen gekennzeichnet sind, die eine Trägerfrequenz für die Kommunikation, ein Zeitintervall für die Kommunikation, ein Frequenzband für die Kommunikation, einen Funkdeckungsbereich für die Kommunikation und eine Sendeleistung für die Kommunikation aufweisen.

8. Verfahren nach Anspruch 6, bei dem ein Funkdeckungsbereich einer ersten Signalisierungseinheit mit einer ersten Strahlbreite die Funkdeckungsfläche(n) der zweiten Signalisierungseinheit(en) umfasst, die von der ersten Signalisierungseinheit abstammt/abstammen, wobei die zweiten Signalisierungseinheit(en) eine zweiten Strahlbreite aufweist/aufweisen, die schmaler als die erste Strahlbreite ist.

9. Verfahren nach Anspruch 6, bei dem eine Übertragungsverstärkung der zweiten Signalisierungseinheit größer als eine Übertragungsverstärkung der ersten Signalisierungseinheit ist.

10. Verfahren nach Anspruch 6, bei dem, wenn die erste Signalisierungseinheit konfiguriert ist, um Steuersignale an die zweite Kommunikationsvorrichtung (110;310) zu übertragen, die zweite(n) Signalisierungseinheit(en) des Weiteren konfiguriert ist/sind, um Daten an die zweite Kommunikationsvorrichtung (110;310) zu übertragen.

11. Verfahren nach Anspruch 6, des Weiteren aufweisend:
Empfangen von einem oder mehreren Hochfrequenzsignalen, die von der ersten Kommunikationsvorrichtung (130;230;330;830;835) über mindestens eine Signalisierungseinheit übertragen werden, durch die zweite Kommunikationsvorrichtung (110;310), um Zeit und Frequenz mit der ersten Kommunikationsvorrichtung (130;230;330;830;835) zu synchronisieren.

12. Verfahren nach Anspruch 6, des Weiteren aufweisend:
Überwachen der Qualität eines oder mehrerer Hochfrequenzsignale, die von der ersten Kommunikationsvorrichtung (130;230;330;830;835) über mindestens eine Signalisierungseinheit übertragen werden, durch die zweite Kommunikationsvorrichtung (110;310), um eine von der Signalisierungseinheit bereitgestellte Dienstqualität zu messen.

13. Verfahren nach Anspruch 6, bei dem die zweite Kommunikationsvorrichtung (110;310) in der Lage ist, eine oder mehrere Signalisierungseinheiten, die in der befestigten Signalisierungseinheit enthalten sind, direkt für Kommunikationen zu verwenden, ohne an der einen oder mehreren Signalisierungseinheiten befestigt zu sein.

14. Verfahren nach Anspruch 6, bei dem nach dem Anbringen an der mindestens einen Signalisierungseinheit eine Zwei-Wege-Steuersignalisierung zwischen der ersten Kommunikationsvorrichtung (130;230;330;830;835) und der zweiten Kommunikationsvorrichtung (110;310) hergestellt wird.

15. Verfahren nach Anspruch 6, des Weiteren aufweisend:
Überwachen der Signalqualität mindestens einer Signalisierungseinheit, die sich von der angebrachten Signalisierungseinheit unterscheidet, durch die zweite Kommunikationsvorrichtung (110;310).

16. Verfahren nach Anspruch 6, des Weiteren aufweisend:
kontinuierliches Überwachen der Signalqualität der angebrachten Signalisierungseinheit und der Signalqualität mindestens einer Signalisierungseinheit, die sich von der angebrachten Signalisierungseinheit unterscheidet, durch die zweite Kommunikationsvorrichtung (110;310) während eines Kommunikationsprozesses mit der ersten Kommunikationsvorrichtung (130;230;330;830;835).

17. Verfahren nach Anspruch 6, des Weiteren aufweisend:
Auswählen eines bevorzugten Eingangssignalpegels durch die zweite Kommunikationsvorrichtung (110;310) aus einer Vielzahl von vordefinierten Eingangssignalpegeln vor dem ersten Anbringen an einer Signalisierungseinheit.

18. Verfahren nach Anspruch 17, bei dem der bevorzugte Eingangssignalpegel durch die zweite Kommunikationsvorrichtung (110;310) basierend auf früheren Eingangserfahrungen der zweiten Kommunikationsvorrichtung (110;310) ausgewählt wird.

## Revendications

1. Dispositif de commande de réseau (130;230;330;830;835), comprenant:
un dispositif de commande (112;232), fournissant une pluralité d'entités de signalisation appartenant chacune à l'un d'une pluralité de niveaux de signalisation pour former des entités de signalisation à niveaux multiples et configurant (708) une ou plusieurs entités de signalisation des entités de signalisation à niveaux multiples pour un appareil de communication (110;310) pour communiquer avec l'appareil de communication (110;310) sur la base des une ou plusieurs entités de signalisation configurées; et
un module de communication sans fil (231), transmettant (710) une pluralité de signaux radiofréquences via les une ou plusieurs entités de signalisation configurées,
dans lequel les entités de signalisation sont les faisceaux de transmission (802-1∼802-3;803-1∼803-7) utilisés pour une formation de faisceaux, et les entités de signalisation à différents niveaux de signalisation sont les faisceaux de transmission (802-1∼802-3;803-1∼803-7) ayant différentes largeurs de faisceau,
**caractérisé en ce que**
l'appareil de communication (110;310) est adapté pour entrer dans un protocole de communication sans fil une première apposition (702) sur au moins une entité de signalisation fournie par le dispositif de commande de réseau (130;230;330;830;835) dans un niveau de signalisation d'entrée de manière à utiliser un ou plusieurs service(s) fournis par la au moins une entité de signalisation; et
les entités de signalisation (401;402∼405;406) à différents niveaux de signalisation forment une structure hiérarchique de type arborescence, dans lesquelles une première entité de signalisation (401) ayant une première largeur de faisceau dans un niveau de signalisation comprend une ou plusieurs secondes entités de signalisation (402~405) dans un niveau de signalisation ultérieur ayant une seconde largeur de faisceau qui est plus étroite que la première largeur de faisceau, la première entité de signalisation étant un ancêtre de la seconde entité de signalisation et les une ou plusieurs secondes entités de signalisation (402∼405) étant un descendant de la première entité de signalisation, respectivement, dans la structure hiérarchique, et
les entités de signalisation à différents niveaux de signalisation sont fournies à l'appareil de communication (110;310) pour qu'il soit capable de camper sur le dispositif de commande de réseau (130;230;330;830;835), ou de s'attacher à celui-ci, par apposition sur les entités de signalisation à différents niveaux de signalisation.

2. Dispositif de commande de réseau (130;230;330;830;835) selon la revendication 1, dans lequel les entités de signalisation sont **caractérisées par** un ou plusieurs d'une pluralité d'attributs de couche physique comprenant une fréquence porteuse pour des communications, un intervalle de temps pour des communications, une bande de fréquence pour des communications, une zone de couverture radio pour des communications et une puissance de transmission pour des communications.

3. Dispositif de commande de réseau (130;230;330;830;835) selon la revendication 1, dans lequel une zone de couverture radio d'une première entité de signalisation ayant une première largeur de faisceau englobe une ou des zone(s) de couverture radio de la seconde entité\des secondes entités de signalisation qui sont des descendants de la première entité de signalisation, la seconde entité\les secondes entités de signalisation ayant une seconde largeur de faisceau qui est plus étroite que la première largeur de faisceau.

4. Dispositif de commande de réseau (130;230;330;830;835) selon la revendication 1, dans lequel un gain de transmission de la seconde entité de signalisation est supérieur à un gain de transmission de la première entité de signalisation.

5. Dispositif de commande de réseau (130;230;330;830;835) selon la revendication 1, dans lequel, lorsque la première entité de signalisation est configurée pour transmettre une signalisation de commande à l'appareil de communication (110;310), les une ou plusieurs seconde entité\secondes entités de signalisation (402∼405) est/sont en outre configurée(s) pour transmettre des données à l'appareil de communication (110;310).

6. Méthode pour effectuer des communications sans fil entre deux appareils de communication (110;310;130;230;330;830;835) dans un réseau de service (120;320) via une pluralité d'entités de signalisation comprenant de:
fournir, par un premier appareil de communication (130;230;330;830;835), des entités de signalisation à niveaux multiples comprenant une pluralité d'entités de signalisation appartenant chacune à l'un d'une pluralité de niveaux de signalisation;
configurer (708), par le premier appareil de communication (130;230;330;830;835), une ou plusieurs entités de signalisation des entités de signalisation à niveaux multiples pour un second appareil de communication (110;310); et
communiquer (710), par le premier appareil de communication (130;230;330;830;835), avec le second appareil de communication (110;310) via les une ou plusieurs entités de signalisation configurées,
dans lequel les entités de signalisation sont les faisceaux de transmission (802-1∼802-3;803-1∼803-7) utilisés pour une formation de faisceaux, et les entités de signalisation à différents niveaux de signalisation sont les faisceaux de transmission (802-1∼802-3;803-1∼803-7) ayant différentes largeurs de faisceau,
**caractérisé en ce que**
le procédé comprend en outre de:
entrer dans un protocole de communication sans fil par une première apposition (702), par le second appareil de communication (110;310), sur au moins une entité de signalisation fournie par le premier appareil de communication (130;230;330;830;835) dans un niveau de signalisation d'entrée de manière à utiliser un ou plusieurs service(s) fourni(s) par la au moins une entité de signalisation; et
les entités de signalisation (401;402∼405;406) à différents niveaux de signalisation formant une structure hiérarchique de type arborescence, dans lesquelles une première entité de signalisation (401) ayant une première largeur de faisceau à un niveau de signalisation comprend une ou plusieurs secondes entités de signalisation (402∼405) à un niveau de signalisation ultérieur ayant une seconde largeur de faisceau qui est plus étroite que la première largeur de faisceau, la première entité de signalisation étant un ancêtre de la seconde entité de signalisation et la seconde entité de signalisation étant un descendant de la première entité de signalisation, respectivement, dans la structure hiérarchique, et
les entités de signalisation à différents niveaux de signalisation étant fournies au second appareil de communication (110;310) pour qu'il soit capable de camper sur le premier appareil de communication (130;230;330;830;835), ou d'être attaché à celui-ci, par apposition sur les entités de signalisation à différents niveaux de signalisation.

7. Méthode selon la revendication 6, dans laquelle les entités de signalisation sont **caractérisées par** un ou plusieurs d'une pluralité d'attributs de couche physique comprenant une fréquence porteuse pour des communications, un intervalle de temps pour des communications, une bande de fréquence pour des communications, une zone de couverture radio pour des communications et une puissance de transmission pour des communications.

8. Méthode selon la revendication 6, dans laquelle une zone de couverture radio d'une première entité de signalisation ayant une première largeur de faisceau englobe une ou des zone (s) de couverture radio de la seconde entité\des secondes entités de signalisation qui sont des descendants de la première entité de signalisation, la seconde entité\les secondes entités de signalisation ayant une seconde largeur de faisceau qui est plus étroite que la première largeur de faisceau.

9. Méthode selon la revendication 6, dans laquelle un gain de transmission de la seconde entité de signalisation est supérieur à un gain de transmission de la première entité de signalisation.

10. Méthode selon la revendication 6, dans laquelle, lorsque la première entité de signalisation est configurée pour transmettre une signalisation de commande au second appareil de communication (110;310), la seconde entité\les secondes entités de signalisation est/sont en outre configurée(s) pour transmettre des données au second appareil de communication (110;310).

11. Méthode selon la revendication 6, comprenant en outre:
la réception, par le second appareil de communication (110;310), d'un ou plusieurs signaux radiofréquences transmis par le premier appareil de communication (130;230;330;830;835) via au moins une entité de signalisation pour synchroniser le temps et la fréquence avec le premier appareil de communication (130;230;330;830;835).

12. Méthode selon la revendication 6, comprenant en outre:
la surveillance, par le second appareil de communication (110;310), de la qualité d'un ou plusieurs signaux radiofréquences transmis par le premier appareil de communication (130;230;330;830;835) via au moins une entité de signalisation pour mesurer une qualité de service fourni par l'entité de signalisation.

13. Méthode selon la revendication 6, dans laquelle le second appareil de communication (110;310) est capable d'utiliser directement une ou plusieurs entité\entités de signalisation comprise(s) dans l'entité de signalisation apposée pour des communications sans apposition sur les une ou plusieurs entité\entités de signalisation.

14. Méthode selon la revendication 6, dans laquelle après apposition sur la au moins une entité de signalisation, une signalisation de commande bidirectionnelle est établie entre le premier appareil de communication (130;230;330;830;835) et le second appareil de communication (110;310).

15. Méthode selon la revendication 6, comprenant en outre:
la surveillance, par le second appareil de communication (110;310), de la qualité de signal d'au moins une entité de signalisation différente de l'entité de signalisation apposée.

16. Méthode selon la revendication 6, comprenant en outre:
la surveillance en continu, par le second appareil de communication (110;310), de la qualité de signal de l'entité de signalisation apposée et de la qualité de signal d'au moins une entité de signalisation différente de l'entité de signalisation apposée pendant un processus de communication avec le premier appareil de communication (130;230;330;830;835).

17. Méthode selon la revendication 6, comprenant en outre:
la sélection, par le second appareil de communication (110;310), d'un niveau de signalisation d'entrée préféré parmi une pluralité de niveaux de signalisation d'entrée prédéfinis avant la première apposition sur une entité de signalisation.

18. Méthode selon la revendication 17, dans laquelle le niveau de signalisation d'entrée préféré est sélectionné par le second appareil de communication (110;310) sur la base d'une expérience d'entrée précédente du second appareil de communication (110;310).
